# EUROPÄISCHE PATENTANMELDUNG

(11) **EP 0 522 245 A1**
(43) Veröffentlichungstag der Anmeldung: **13.01.1993**
(21) Anmeldenummer: 92106839.1
(22) Anmeldetag: 22.04.1992
(51) Int. Cl.: B01D 46/24, F01N 3/02

(54) **Russpartikelfilter**

(30) Priorität: 25.06.1991 DE 4120920
(71) Anmelder: DIDIER-WERKE AG, D-65189 Wiesbaden (DE)
(72) Erfinder: Jenrich, Thielo, W-6200 Wiesbaden (DE); Thalheim, Dietmar, Dr., W-6050 Offenbach (DE); Kalfa, Horst, Dr., W-6270 Idstein (DE)
(74) Vertreter: Brückner, Raimund, Dipl.-Ing.

(57) **Zusammenfassung**

In einem Gehäuse (1) eines Rußpartikelfilters bilden mehrere zylindrische, keramische Filterkörper (15) rohgasseitige und reingasseitige Kanäle, wobei die einen Kanäle von den Zwischenräumen (16) und die anderen Kanäle von den Innenräumen (17) der Filterkörper (15) gebildet sind. Um Aufbau und Funktion des Rußpartikelfilters zu verbessern, sind im Gehäuse (1) bei beiden axialen Enden der Filterkörper (15) Filterböden (2, 3) angeordnet, die die Filterkörper (15) zwischen sich tragen und die zwei Reingasräume (10, 12) begrenzen. Jeder Innenraum (17) ist zum einen und/oder dem anderen Reingasraum (10, 12) offen. Der Rohgasanschluß (4) liegt zwischen den Filterböden (2, 3).

## Beschreibung

Die Erfindung betrifft einen Rußpartikelfilter mit mehreren zylindrischen, keramischen Filterkörpern, die in einem Gehäuse rohgasseitige und reingasseitige Kanäle bilden, wobei die einen Kanäle von Zwischenräumen und die anderen Kanäle von den Innenräumen der Filterkörper gebildet sind.

Ein derartiges Filter ist in der DE 32 35 363 A1 beschrieben. Bei diesem sind die Innenräume an ihrem einen axialen Ende offen und ihnen wird das Rohgas zugeführt, so daß sich der abgefilterte Ruß innen an den Innenräumen absetzt. Er kann dabei verdickte Nester bilden, die schwer abzureinigen sind. Am anderen axialen Ende wird aus den Zwischenräumen das Reingas abgezogen. Die Rohgasströme und die Reingasströme verlaufen bei einer solchen Anordnung im wesentlichen parallel zueinander und parallel zur Längsachsrichtung der Filterkörper. Dies führt über die axiale Länge der Filterkörper gesehen zu ungleichmäßigen Strömungsverhältnissen. Solche können die Filterfunktion beeinträchtigen. Sich in den Innenräumen bildende Rußnester lassen sich nicht nur schwer abreinigen, sondern erhöhen auch zonal den Strömungswiderstand.

Aufgabe der Erfindung ist es, ein Rußpartikelfilter der eingangs genannten Art vorzuschlagen, dessen Aufbau und Funktion verbessert ist.

Erfindungsgemäß ist obige Aufgabe bei einem Rußpartikelfilter der eingangs genannten Art dadurch gelöst, daß in dem Gehäuse bei beiden axialen Enden der Filterkörper Filterböden angeordnet sind, die die Filterkörper zwischen sich tragen und die zwei Reingasräume begrenzen, daß jeder der Innenräume zum einen und/oder dem anderen Reingasraum offen ist und daß das Gehäuse zwischen den Filterböden einen Rohgasanschluß aufweist, zu dem die Zwischenräume quer zur Längsachsrichtung der Filterkörper offen sind.

Die Filterflächen, an denen sich der abgefilterte Ruß absetzt, sind dabei nicht von den Innenräumen der Filterkörper, sondern von deren Außenflächen gebildet. Da die Außenfläche des Filterkörpers größer ist als dessen Innenfläche, ist dadurch insgesamt die Filterfläche, an der sich der Ruß ablagert, vergrößert.

Weil der Rohgasstrom aus dem Rohgasanschluß quer zur Längsachsrichtung der Filterkörper auf deren Außenseiten trifft, ist eine recht gleichmäßige Verteilung des Rußes an den Filterkörpern erreicht. Dies verbessert die Filterfunktion und erleichtert die Regeneration der Filterflächen. Eine solche Regeneration kann durch Abbrennen der Rußpartikel oder durch ein Rückblasen von der Reingasseite her vorgenommen werden.

Da nicht nur an einem axialen Ende der Filterkörper ein Reingasraum, sondern an beiden Enden der Filter Reingasräume vorgesehen sind, ergeben sich günstige Aufbau- und Montagebedingungen. Denn die Filterkörper können wechselweise zum einen oder zum anderen Filterboden offen sein. Sie brauchen dann nur jeweils an demjenigen Filterboden abgedichtet befestigt zu werden, an dem sie zum einen Reingasraum offen sind. Dies ermöglicht einen kompakten Aufbau, da die Abdichtung an sich Platz beansprucht. Außerdem sind dadurch auch die Reparaturmöglichkeiten verbessert, da die einen Filterkörper vom einen Reingasraum und die anderen Filterkörper vom anderen Reingasraum her austauschbar sind. Bei solchen Arbeiten muß das Filter nicht von der Rohgasleitung demontiert werden.

Es ist jedoch auch möglich, den Innenraum jedes der Filterkörper in beide Reingasräume offen münden zu lassen. Dadurch verbessern sich die Strömungsverhältnisse, da aus jedem Filterkörper Rohgas in den einen und in den anderen Reingasraum abströmen kann.

Weitere vorteilhafte Ausgestaltungen der Erfindung ergeben sich aus den Unteransprüchen und der folgenden Beschreibung eines Ausführungsbeispiels. In der Zeichnung zeigen:

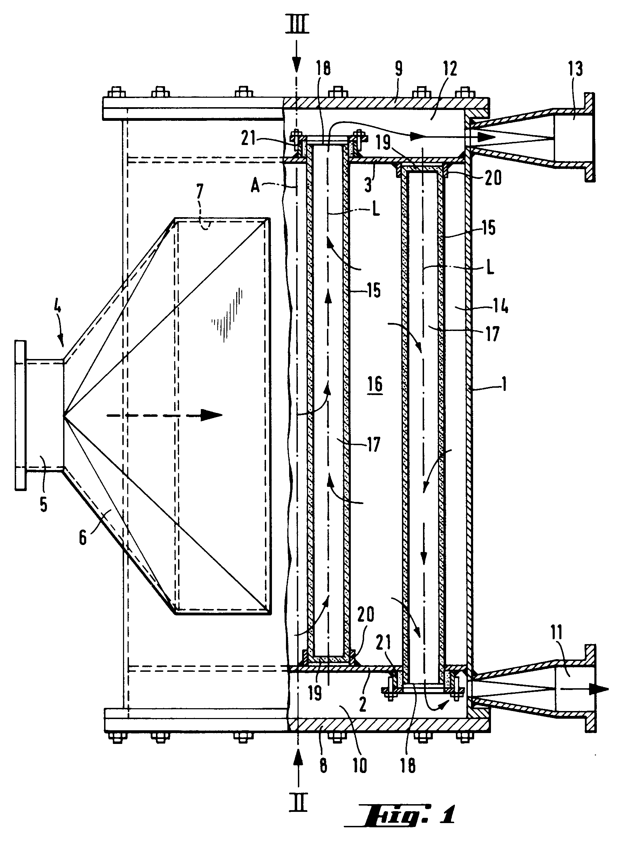

- Figur 1: eine schematische Aufsicht eines Rußpartikelfilters, wobei das Gehäuse teilweise offen gezeigt ist und Filterkörper nur teilweise sichtbar sind,
- Figur 2: eine Ansicht der Filterkörper vom einen Filterboden, in Richtung des Pfeiles II in Figur 1,
- Figur 3: eine Ansicht der Filterkörper vom anderen Filterboden, in Richtung des Pfeiles III nach Figur 1 und
- Figur 4: eine vergrößerte Teilansicht eines Filterkörpers zwischen den beiden Filterböden.

Ein Rußpartikelfilter weist ein zylindrisches Gehäuse 1 auf, in das im Bereich seiner Enden zwei Filterböden 2, 3 eingeschweißt sind. Zwischen den beiden Filterböden 2,3 ist im Gehäuse 1 ein Rohgasanschluß 4 befestigt. Dieser weist einen Anschlußstutzen 5 auf; der mit einem Trichter 6 verbunden ist, welcher sich vom Anschlußstutzen 5 zu einer im wesentlichen rechteckigen Einlaßöffnung 7 erweitert, welche in das Innere des Gehäuses 1 mündet. Die Einlaßöffnung 7 nimmt einen großen Teil der Länge des Gehäuses 1 zwischen den Filterböden 2, 3 ein.

Neben dem Filterboden 2 bzw. 3 ist das Gehäuse 1 durch einen abnehmbaren Deckel 8 bzw. 9 abgeschlossen. Der Raum zwischen dem Filterboden 2 und dem Deckel 8 bildet einen Reingasraum 10, der in einen Reingasanschluß 11 mündet. Der Raum zwischen dem Filterboden 3 und dem Deckel 9 bildet einen Reingasraum 12, der in einen Reingasanschluß 13 mündet. Dementsprechend bildet der Raum innerhalb des Gehäuses 1, zwischen den Filterböden 2, 3, in denen die Einlaßöffnung 7 mündet, einen Rohgasraum 14.

Zwischen den beiden Filterböden 2, 3 ist eine Vielzahl von zylindrischen, keramischen Filterkörpern, insbesondere Filterkerzen 15, angeordnet. Diese erstrecken sich durch den Rohgasraum 14 und bilden in diesem Zwischenräume 16. Ihre Längsachsrichtungen L liegen zueinander und zur Längsachse A des Gehäuses 1 parallel.

Jede Filterkerze 15 weist einen Innenraum 17 auf. Die Innenräume 17 der Filterkerzen 15 sind beim Ausführungsbeispiel an ihrem einen axialen Ende 18 zum Reingasraum 10 oder zum Reingasraum 12 offen. Am anderen axialen Ende 19 sind die Filterkerzen 15 geschlossen.

Jeder Filterboden 2, 3 weist Einsteckringe 20 zur Aufnahme der geschlossenen Enden 19 der Filterkerzen 15 auf. Für jedes offene Ende 18 der Filterkerzen 15 ist der Filterboden 2 bzw. 3 mit einer Dichthülse 21 versehen.

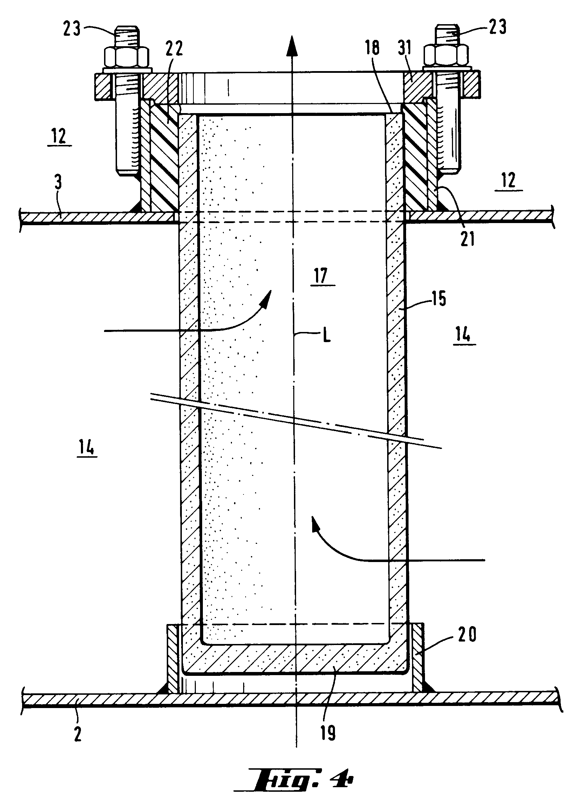

Der Durchmesser der Dichthülse 21 ist größer als der des Einsteckrings 20, da zwischen ihr und dem offenen Ende 18 eine Dichtung 22 (vgl. Figur 4) anzuordnen ist. Die Dichtung 22 ist beispielsweise eine Stopfbuchsendichtung. Diese ist mittels eines Ringes 31der an Schraubbolzen 23 der Dichthülse 21 anzusetzen ist, zwischen die Dichthülse 21 und das offene Ende 18 der Filterkerze 15 zu drücken.

Bei der beschriebenen Anordnung ist im Gehäuse 1 eine sehr dichte, d.h. enge, Anordnung der Filterkerzen möglich, da nicht am einen Filterboden alle Dichthülsen für alle Filterkerzen 15 vorgesehen sein müssen, sondern die Dichthülsen, die mehr Raum einnehmen als die Einsteckringe 20, über die beiden Filterböden 2, 3 verteilt sein können, wobei dann ein Teil der Filterkerzen 15 zum Reingasraum 10 und ein anderer Teil der Filterkerzen 15 zum Reingasraum 12 offen ist.

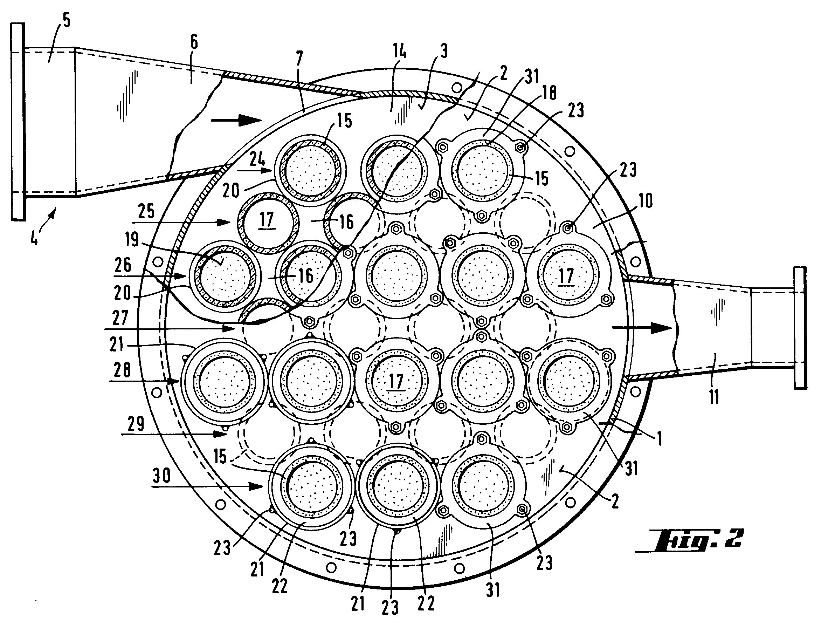

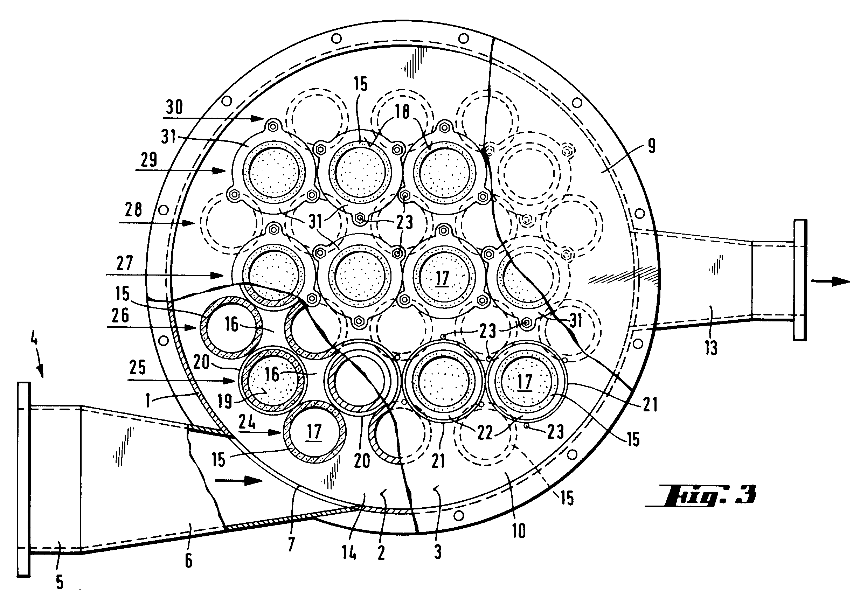

Bei der Anordnung nach den Figuren 2 und 3 sind die Filterkerzen 15 in Reihen 24 bis 30 angeordnet. Die Filterkörper der Reihen 24, 26, 28, 30 sind an Dichthülsen 21 des Filterbodens 2 abgedichtet gehalten und damit zum Reingasraum 10 offen. Die Filterkörper der Reihen 25, 27, 29 sind an den Dichthülsen 21 des Filterbodens 3 abgedichtet gehalten und sind zum Reingasraum 12 offen. Dadurch ist eine sehr kompakte Anordnung der Filterkerzen 15 im Rohgasraum 14 möglich.

Damit das Rohgases bis zu den innersten Filterkerzen 15 strömen kann, ist ein Abstand zwischen den Filterkerzen 15 von beispielsweise 2mm genügend, wobei von einem Filterkerzenaußendurchmesser von etwa 50 mm ausgegangen ist. Die Filterkerzen 15 können sich innerhalb des Rohgasraums 14 jedoch auch berühren. Ihre Porosität stellt eine hinreichende Durchströmung des Rohgases bis zu der innersten Filterkerze sicher.

Der kompakte Aufbau des Rußpartikelfilters mit hoher Ausnutzung des Volumens des Gehäuses 1 durch Rußpartikel aufnehmende Filterflächen ergibt sich auch dann, wenn die Filterkerzen 15 anders als in den beschriebenen Reihen 24 bis 30 angeordnet sind. Wesentlich für die hohe Volumenausnutzung ist, daß ein Teil der Filterkerzen 15 nur am einen Filterboden 2 und ein anderer Teil der Filterkerzen 15 nur am anderen Filterboden 3 abgedichtet befestigt sein müssen.

Die Funktionsweise des beschriebenen Rußpartikelfilters ist etwa folgende:
Das durch den Rohgasanschluß 4 eingeleitete Rohgas tritt in die Zwischenräume 16 quer zur Längsachse L im wesentlichen gleichmäßig ein, so daß die Außenseiten der Filterkerzen 15 über ihre Länge gesehen, im wesentlichen gleichmäßig mit Rohgas beaufschlagt werden, wobei die Beaufschlagungsrichtung des Rohgasstromes radial oder tangential zur Längsachse L liegt. Dies führt zu einer gleichmäßigen Rußpartikelablagerung außen an den Filterkerzen 15. Die Filterkerzen 15 leiten das Reingas über ihre Innenräume 17 zu dem einen oder dem anderen Reingasraum(10,12) ab, ohne daß die Innenräume besondere Strömungswiderstände bilden.

Aufgrund der gleichmäßigen Beladung der äußeren Oberflächen der Filterkerzen 15 ist auch ein leichtes Abbrennen der Rußpartikel zur Regeneration des Filters möglich. Die gleichmäßige Beladung mit Rußpartikeln ermöglicht auch eine Regeneration des Filters durch Rückblasen von den Reingasräumen 10, 12 her.

Die Wartung des beschriebenen Rußpartikelfilters ist einfach und beansprucht keine lange Montagezeiten. Denn nach Abnahme der beiden Deckel 8, 9 sind die Filterkerzen 15 leicht erreichbar. Das Gehäuse 1 braucht hierfür weder von dem Rohgasanschluß 4 noch von den Reingasanschlüssen 11, 13 getrennt zu werden.

Bei einem anderen Ausführungsbeispiel ist es auch möglich, anstelle der Filterkerzen Filtertüllen vorzusehen, die an beiden Enden offen sind. Deren eines Ende ist dann im Einsteckring 20 dicht zu halten.

Bei einer weiteren Ausführung der Erfindung kann jedoch auch vorgesehen sein, einen Filterkörper zu verwenden, der zu beiden Reingasräumen 10, 12 offen ist. Der räumliche Aufbau wird dann weniger kompakt sein, da an beiden Enden jedes Filterkörpers eine dichte Durchführung in die Reingasräume 10, 12 nötig ist. Jedoch ist dann erreicht, daß jeder Filterkörper in beide Reingasräume 10, 12 mündet.

## Patentansprüche

1. Rußpartikelfilter mit mehreren zylindrischen, keramischen Filterkörpern, die in einem Gehäuse rohgasseitige und reingasseitige Kanäle bilden, wobei die einen Kanäle von den Zwischenräumen und die anderen Kanäle von den Innenräumen der Filterkörper gebildet sind,
dadurch gekennzeichnet,
daß in dem Gehäuse (1) bei beiden axialen Enden (18,19) der Filterkörper (15) Filterböden (2, 3) angeordnet sind, die die Filterkörper (15) zwischen sich tragen und die zwei Reingasräume (10, 12) begrenzen, daß jeder der Innenräume (17) zum einen und/oder dem anderen Reingasraum (10, 12) offen ist und daß das Gehäuse (1) zwischen den Filterböden (2, 3) einen Rohgasanschluß (4) aufweist, zu dem die Zwischenräume (16) quer zur Längsachsrichtung (L) der Filterkörper (15) offen sind.

2. Rußpartikelfilter nach Anspruch 1,
dadurch gekennzeichnet,
daß die Filterkörper als Filterkerzen (15) zum einen Reingasraum (10, 12) offen und zum anderen Raum (12,10) geschlossen sind.

3. Rußpartikelfilter nach Anspruch 1 oder 2,
dadurch gekennzeichnet,
daß benachbarte Filterkörper (15) abwechselnd zum einen oder zum anderen Reingasraum (10, 12) offen sind.

4. Rußpartikelfilter nach einem der vorhergehenden Ansprüche,
dadurch gekennzeichnet, daß offene Enden (18) der Filterkörper (15) an einem der Filterböden (2, 3) mittels einer Dichtung (22) befestigt sind und die geschlossenen Enden (19) der Filterkörper (15) von dem anderen Filterboden (2, 3) gehalten sind.

5. Rußpartikelfilter nach einem der vorhergehenden Ansprüche,
dadurch gekennzeichnet,
daß der Rohgasanschluß (4) das Rohgas in die Zwischenräume (16) mit einer Strömungsrichtungskomponente senkrecht zur Längsachsrichtung (L) der Filterkörper (15) einleitet.

6. Rußpartikelfilter nach einem der vorhergehenden Ansprüche,
dadurch gekennzeichnet,
daß sich der Rohgasanschluß (4) in das Gehäuse (1) über einen Trichter (6) erweitert.
